Europäisches Patentamt

European Patent Office

Office européen des brevets

(11) Veröffentlichungsnummer: **0 257 539**
**B1**

(12) # EUROPÄISCHE PATENTSCHRIFT

(45) Veröffentlichungstag der Patentschrift:
14.11.90

(51) Int. Cl.⁵: **F16K 11/07**

(21) Anmeldenummer: 87112016.8

(22) Anmeldetag: 19.08.87

(54) **Hydraulisches Ventil.**

(30) Priorität: 28.08.86 DE 3629318
03.07.87 DE 3722053

(43) Veröffentlichungstag der Anmeldung:
02.03.88 Patentblatt 88/9

(45) Bekanntmachung des Hinweises auf die Patenterteilung:
14.11.90 Patentblatt 90/46

(84) Benannte Vertragsstaaten:
AT BE CH DE ES FR GB LI SE

(56) Entgegenhaltungen:
DE-A- 1 550 400
DE-A- 2 108 705
DE-A- 2 603 371
DE-A- 2 633 443
DE-A- 2 808 447
DE-A- 2 808 477

(73) Patentinhaber: Ecker Maschinenbau GmbH & Co. KG,
Friedrichsthaler Strasse 15,
D-6680 Neunkirchen-Heinitz(DE)

(72) Erfinder: Mateja, Ernst, Lutherstrasse 7,
D-6680 Neunkirchen(DE)

(74) Vertreter: Bernhardt, Winfrid, Dr.-Ing.,
Kobenhüttenweg 43, D-6600 Saarbrücken(DE)

Anmerkung: Innerhalb von neun Monaten nach der Bekanntmachung des Hinweises auf die Erteilung des europäischen Patents im Europäischen Patentblatt kann jedermann beim Europäischen Patehtamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein hydraulisches Ventil mit einem äußeren Teil von abschnittweise zylindrischem Innenumfang und einem axial relativbeweglich darin angeordneten inneren Teil von abschnittweise zylindrischem Außenumfang, wobei in dem einen, äußeren oder inneren, Teil ein hydraulischer Druckraum angeordnet ist, der an dem Innen- bzw. Außenumfang dieses Teils einen Ausfluß aufweist und dem eine Weiterführung zugeordnet ist, die in Schließstellung durch einen in einer Ringnut des anderen Teils sitzenden Dichtring von dem Ausfluß dicht getrennt ist und in Öffnungsstellung, in der der Dichtring sich auf der anderen Seite des Ausflusses befindet, an den Ausfluß anschließt.

In einem solchen Ventil muß bei dem zum Öffnen wie zum Schließen stattfindenden Verschieben des äußeren und des inneren Teils gegeneinander der Dichtring über den Ausfluß hinweggleiten.

Das ist unerwünscht. Der Dichtring soll sich nicht an den Rändern des Ausflusses schaben oder gar quetschen. Um derartigen Verschleiß oder Beschädigungen des Dichtringes möglichst zu vermeiden, hat man den Druckraum als Ringraum und den Ausfluß als eine Reihe von Bohrungen gestaltet, die den Ringraum mit dem Innenumfang (wenn es sich um das äußere Teil handelt) bzw. dem Außenumfang (wenn es sich um das innere Teil handelt) verbinden. Dabei bleibt jedoch der freie Querschnitt des Ausflusses verhältnismäßig beschränkt (siehe z.B. die DE-A 2 808 477). Außerdem ist die Herstellung umständlich.

Der Erfindung liegt die Aufgabe zugrunde, den Durchflußquerschnitt zu vergrößern und die Herstellung zu vereinfachen, dabei aber den Dichtring lange funktionsfähig zu erhalten.

Die erfindungsgemäße Lösung dieser Aufgabe besteht darin, daß der Ausfluß des Druckraumes als ein mindestens in Abschnitten über den betreffenden Innen- bzw. Außenumfang laufender Spalt ausgebildet ist.

Der, vorzugsweise ununterbrochen ringförmige, Spalt bietet zwar dem Dichtring, während er an ihm vorbeikommt, gegenüber dem vorher leicht gedrückten Zustand räumlich die größte Ausdehungsmöglichkeit, so daß an der hinteren Kante des Spaltes ein erneutes Zusammendrücken des Dichtrings unter Verschleiß, beides im größten denkbaren Ausmaß, stattfinden müßte.

Tatsächlich aber dehnt sich der Dichtring, obwohl er an sich seinen unverformten Querschnitt einnehmen möchte, fast nicht in den Spalt hinein aus.

Diese Beobachtung konnte jedenfalls in einem mit 50 bar beaufschlagten Plexiglas-Modell eines Ventils an einem O-Ring gemacht werden. Sie wird bestätigt durch Versuche mit einem mit 350 bar beaufschlagten Ventil, in dem nach 100000 Belastungsspielen der O-Ring noch intakt war. Gefordert werden 5000 Belastungsspiele.

Nach einer weiteren Erkenntnis und vergleichbaren Erfahrung kann sogar ein Lippendichtring mit dem nach der Erfindung vorgesehenen Spalt überstrichen werden. In der einen Richtung übt dabei die eine Wand des Spalts zwar eine Stauchkraft auf die Lippe aus, wenn diese sich in den Spalt hinein ausgedehnt hat. Diese Stauchkraft kann man jedoch genügend gering halten durch eine Abschrägung von beispielsweise 15 bis 20°, die die Endkante der Lippe anhebt, wie man es von den als Hilfswerkzeug dienenden Montagehülsen für die Lippendichtringe kennt. Wichtig ist dabei die im Vergleich zum O-Ring äußerst geringe Vorspannung des Lippendichtringes, der seine Anpressung im wesentlichen nur aus dem Fluiddruck erhält. Alles dies gilt für Lippendichtringe symmetrischen wie unsymmetrischen Querschnitts.

Auch die aus reibungsarmem Kunststoff hergestellten Glattringe einer Dichtringkombination können mit dem Spalt überstrichen werden. Sie sind insoweit, zusammen mit ihrem elastischen Druckring, dem O-Ring ähnlich.

Als eine konkretere Gestaltung des Ventils wird schließlich vorgeschlagen, daß der genannte in einem inneren Teil angeordnete hydraulische Druckraum, der an dem Außenumfang des inneren Teils den als Spalt ausgebildeten Ausfluß aufweist und dem die Weiterführung zugeordnet ist, die in Schließstellung durch den in einer Ringnut des äußeren Teils sitzenden Dichtring von dem Spalt dicht getrennt ist und in Öffnungsstellung, in der der Dichtring sich auf der anderen Seite des Spaltes befindet, an den Spalt anschließt, vom äußeren Teil her beaufschlagt ist in der Weise, daß ein am Innenumfang des äußeren Teils angeordneter Ringraum, in den ein Druckmittelanschluß mündet, in der Schließstellung mit zwei durch eine Mehrzahl von Längsbohrungen verbundenen Druckräumen des inneren Teils in Verbindung steht, die in der Schließstellung, zusammen genommen, abgedichtet sind durch zwei in Ringnuten des äußeren Teils sitzende und an dem inneren Teil anliegende Dichtringe, jenseits derer die Weiterführungen eingerichtet sind.

Dieser Gegenstand bedeutet eine vorteilhafte Weiterbildung derjenigen Alternative des Gegenstands der Grunderfindung, daß die Dichtringe am äußeren Teil angeordnet sind und von einem am inneren Teil angeordneten Spalt überfahren werden.

Diese Alternative verlangt, soweit das Druckmedium nicht axial in das Ventil eingeführt wird, den Umweg für das Druckmedium einzurichten, daß es aus dem äußeren Teil erst einmal in das innere überführt wird und in dem inneren Teil der hydraulische Druckraum geschaffen wird, aus dem das Medium dann durch den Spalt wieder ausfließt.

Die angegebenen Merkmale bewirken, daß immer der volle Druck innerhalb des inneren Teils aufgebaut ist, nämlich in der Schließstellung, ehe ein Spalt den Dichtring überfährt, und daß dabei der volle Druck unter diesem Spalt erhalten bleibt, nämlich durch die Längsbohrungen hindurch von der anderen Seite her.

Herstellungstechnisch läßt sich die Ausbildung einfach und zweckmäßig verwirklichen durch das bereits erwähnte Zusammenfügen, vorzugsweise Zusammenschrauben, des inneren Teils am Spalt.

Die Zeichnung gibt Ausführungs- und Anwendungsbeispiele der Erfindung,

Um keine Vorsicht außer Acht zu lassen, wird man auch für den O-Ring und den Glattring die Kanten des Spalts abschrägen oder abrunden und vorzugsweise die Kanten der den O-Ring oder Glattring aufnehmenden Ringnut gleichfalls etwas.

Wohlgemerkt gilt das für das Gleiten des Dichtringes über den spaltförmigen Ausfluß eines Druckraumes und nicht, umgekehrt, den Eingang einer Weiterführung.

Besteht die Gefahr einer Umkehrung der Druckrichtung, wie z.B. bei hydraulischen Grubenstempeln durch Gebirgssenkung, so kann dem mit der Ausgestaltung und Weiterbildung der Erfindung begegnet werden, daß der Dichtring in der genannten Ringnut mit axialer Vorpressung sitzt und die Ringnut hinter dem Dichtring mit dem genannten Druckraum verbunden ist und dieser nach der hydraulischen Druckmittelquelle hin durch ein Rückschlagventil verschließbar ist.

Die Wirkungsweise dieser Maßnahme ist weiter unten erläutert.

Nach einer weiteren vorteilhaften Ausgestaltung der Erfindung ist der Spalt durch Zusammenfügen, vorzugsweise Zusammenschrauben, des betreffenden Teils an dem Spalt gebildet.

So kann nach einer weiteren vorteilhaften Ausgestaltung der Erfindung die Spaltbreite auch veränderbar sein, vorzugsweise mittels unterschiedlicher Abstandhalter.

Die Spaltbreite kann z.B. bei einem O-Ring 3/4 des Schnurdurchmessers betragen. Sie kann aber auch etwas größer als der Schnurdurchmesser sein oder sehr viel kleiner.

Die mit der Erfindung erzielte Vergrößerung des Durchflußquerschnittes und Verminderung des Durchflußwiderstandes erlaubt eine bedeutende bauliche Verkleinerung des Ventils. Es kann auch zusammen mit anderen Ventilen und den zugehörigen Leitungsverbindungen (z.B. eine ganze Ablaufsteuerung) in eine, dann das Ventilgehäuse bildende, Platte eingearbeitet werden.

Fig. 1 zeigt eine Ventilanordnung, oben in Schließstellung und unten in Öffnungsstellung,

Fig. 2 zeigt eine Steuerschieberanordnung, oben in Schließstellung nach der einen und in Öffnungsstellung nach der anderen Seite und unten umgekehrt,

Fig. 3 zeigt eine zweite Steuerschieberanordnung, oben in Schließstellung nach beiden Seiten und unten in Schließstellung nach der einen und Öffnungsstellung nach der anderen Seite,

Fig. 4 zeigt die Steuerschieberanordnung nach Fig. 3 in Schließstellung bzw. Öffnungsstellung umgekehrt zum unteren Teil von Fig. 3,

Fig. 5 zeigt ein Ventil mit zweiseitigem Austritt, oben in Schließstellung und unten in Öffnungsstellung,

Fig. 6 zeigt eine dritte Steuerschieberanordnung, oben in Schließstellung und unten in Öffnungsstellung nach der einen Seite,

Fig. 7 zeigt eine Druckbegrenzungsventilanordnung, oben in Schließstellung und unten in Öffnungsstellung,

Fig. 8 zeigt eine dritte Steuerschieberanordnung,

Fig. 9 zeigt eine vierte Steuerschieberanordnung,

Fig. 10 zeigt ein zweites Druckbegrenzungsventil,

Fig. 11 zeigt die Steuerschieberanordnung nach Fig. 8, das linke Ende abgeschnitten, mit einem anderen Dichtring,

Fig. 12 zeigt die Steuerschieberanordnung nach Fig. 6, das linke Ende abgeschnitten, mit einem anderen Dichtring,

Fig. 13 zeigt die Steuerschieberanordnung nach Fig. 6 mit einer Abwandlung,

Fig. 14 zeigt ein Sicherheitsventil.

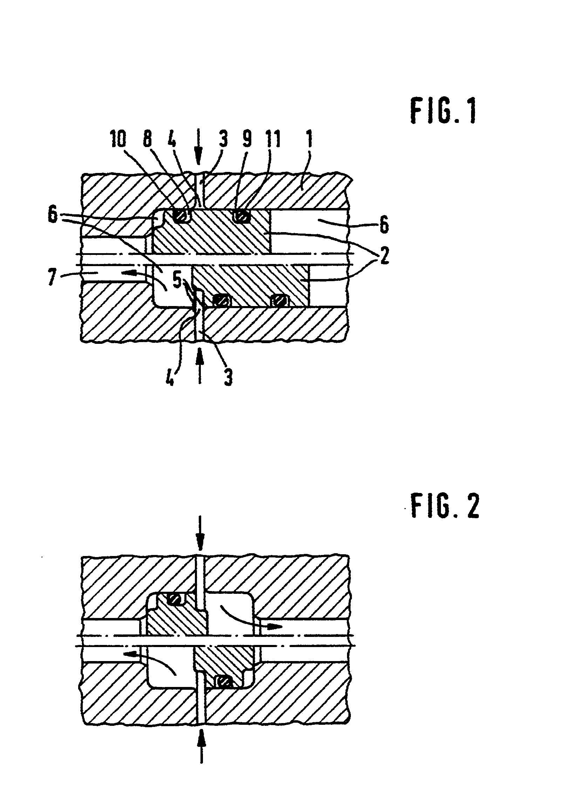

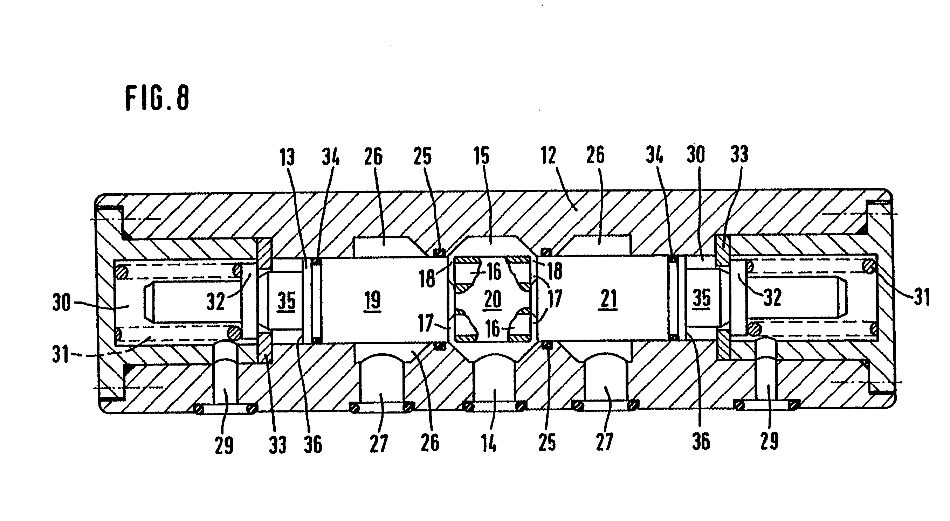

Fig. 1 bis 7 und 11 bis 13 sind schematische, Fig. 8 bis 10 und 14 sind konkretere Darstellungen.

Fig. 1 zeigt ein äußeres Teil in Form eines Zylinders 1 mit einem Kolben 2 als einem darin verschiebbaren inneren Teil. Der Zylinder 1 könnte beispielsweise das Ventilgehäuse sein, aber auch ein seinerseits erst in dem Ventilgehäuse sitzendes Teil.

Der Zylinder 1 weist einen an eine hydraulische Druckmittelquelle angeschlossenen Druckraum 3 auf, der als ein Spalt 4 mit abgerundeten Kanten 5 in den Zylinderraum 6 mündet. Dieser bildet zusammen mit einer Austrittsöffnung 7 eine Weiterführung für das Druckmittel. Auf der anderen Seite des Kolbens 2 steht in dem Zylinderraum ein hydraulisches Druckmedium an, das den Kolben 2 gegen die Kraft einer nicht eingezeichneten Rückstellfeder in die Schließstellung verschiebt und darin hält.

Der Kolben 2 weist zwei Ringnuten 8 und 9 mit je einem O-Ring 10 bzw. 11 auf. Die Ringnut 8 mit dem O-Ring 10 ist in der Schließstellung zwischen dem Spalt 4 und der Austrittsöffnung 7 angeordnet und in der Öffnungsstellung auf der anderen Seite des Spalts 4. Der in der Ringnut 9 sitzende O-Ring 11 dichtet zwischen dem Spalt 4 und demjenigen Teil des Zylinderraums 6 ab, in dem das den Kolben 2 bewegende Druckmittel ansteht. Die O-Ringe 10 und 11 bestehen aus üblichem Material, wie Polyacrylatkautschuk oder ungeschäumtem Polyurethan. Die Ringnuten 8 und 9 sind mit ihren Querschnitten in üblicher Weise als O-Ring-Sitz gestaltet und bemessen. Auch ihre Kanten können, was in der Zeichnung nicht zu erkennen ist, abgeschrägt oder abgerundet sein.

Der O-Ring 10 liegt in der in Fig. 1 oben dargestellten Schließstellung außer am Innenumfang des Zylinders 1 und am Grund der Ringnut 8 ferner an der linken Seitenwand der Ringnut 8 an. Wird der Kolben 2 durch Nachlassen des auf seiner rechten Seite anstehenden Druckes durch die erwähnte, nicht gezeichnete Feder in die in Fig. 1 unten dargestellte Öffnungsstellung verschoben, so liegt der O-Ring 10 anschließend an der rechten Seitenwand seiner Ringnut 8 an.

Die Umlagerung des O-Rings 10 vollzieht sich, nachdem der O-Ring 10 bei seinem Vorbeigleiten an dem Spalt 4 dessen hintere Kante erreicht hat. An dieser stößt der O-Ring 10 nicht oder jedenfalls nicht in schädlicher Weise an. Es bleibt ein Film der Hydraulikflüssigkeit dazwischen. Bei der Verschiebung des Kolbens 2 in die Schließstellung vollzieht sich umgekehrt das gleiche.

An dem Steuerschieber nach Fig. 2 finden sich im wesentlichen die gleichen Teile wieder. Im Unterschied zu Fig. 1 weist der Kolben hier jedoch nur eine Ringnut mit einem O-Ring auf. Statt des nach Fig. 1 auf der rechten Seite des Kolbens 2 anstehenden Druckmittels für die Steuerung des Kolbens ist in Fig. 2 eine zweite Austrittsöffnung vorhanden. Der Kolben wird durch nicht dargestellte Betätigungsmittel verschoben.

Alles übrige ist sinngemäß das gleiche wie nach Fig. 1 und aus der Zeichnung heraus zu verstehen.

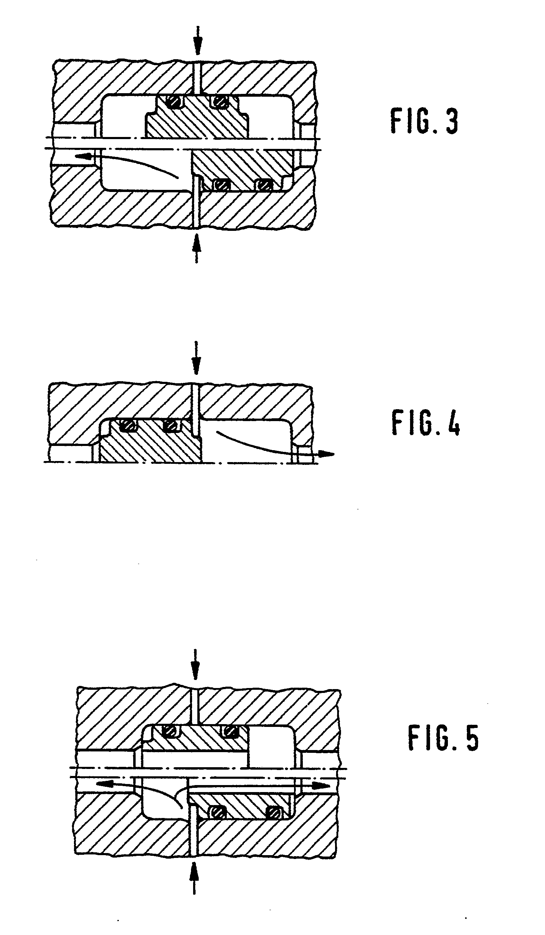

Für den Steuerschieber nach Fig. 3 und 4 gilt das gleiche mit der einen Abwandlung gegenüber Fig. 2, daß zwei O-Ringe vorhanden sind, die eine Schließstellung gegenüber beiden Seiten ermöglichen.

Das Ventil nach Fig. 5 entspricht demjenigen nach Fig. 1 mit dem Unterschied, daß wiederum statt des Druckmittels zum Bewegen des Kolbens auf der rechten Seite eine zweite Austrittsöffnung vorhanden ist und der Kolben durch nicht dargestellte Betätigungsmittel von äußeren verschoben wird, und zwar, weil der Kolben hier hohl ausgebildet ist, um in Öffnungsstellung einen Austritt des Druckmittels nach beiden Seiten zu haben.

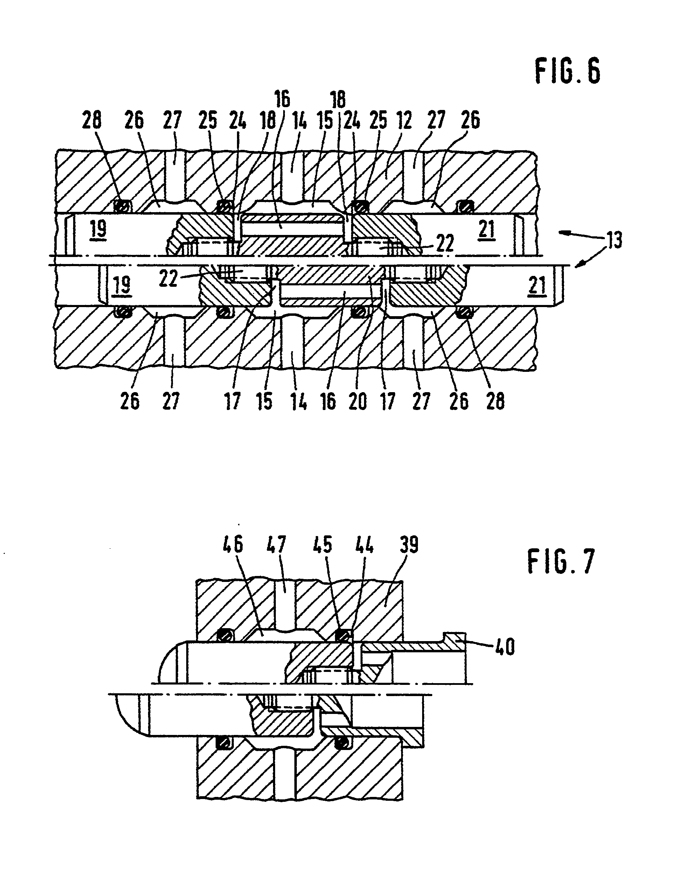

Der Gegenstand der Fig. 6 weist als äußeres Teil einen Zylinder 12 und als inneres Teil einen doppelseitigen Kolben 13 auf.

Ein Druckmittelanschluß 14 mündet in dem Zylinder 11 in einen Ringraum 15. Dieser steht in der in Fig. 6 oben gezeichneten Schließstellung mit zwei durch eine Mehrzahl von Längsbohrungen 16 verbundenen Druckräumen 17 des Kolbens 13 in Verbindung. Die Druckräume 17 haben auf ihrer gesamten radialen Tiefe die Form von Spalten. Am Außenumfang ist der Spalt jeweils mit 18 bezeichnet. Die Kanten sind gerundet. Die Druckräume 17 und Spalte 18 sind eingerichtet durch eine Unterteilung des Kolbens 13 in drei axial aneinanderschließende Teile 19, 20 und 21, die bei 22 und 23 zusammengeschraubt sind.

Abgedichtet sind die Druckräume 17 und Spalte 18 in der Schließstellung durch zwei in Ringnuten 24 des Zylinders 12 sitzende und an den Teilen 19 und 21 des Kolbens 13 anliegende O-Ringe 25.

Jenseits der O-Ringe 25 sind zwei weitere, wie der Ringraum 15 nach dem Zylinderinnenraum hin offene Ringräume 26 in dem Zylinder 1 eingerichtet und mit Austrittsöffnungen 27 für das Druckmittel versehen. Sie sind an ihren axialen Außenseiten mittels O-Ringen 28 abgedichtet.

In der in Fig. 6 unteren Stellung ist der Kolben 13 so weit nach rechts verschoben, daß sein rechter Spalt 18 über den rechten O-Ring 25 hinweggeglitten ist und in den rechten Ringraum 26 mündet. So sind die Ringräume 15 und der rechte Ringraum 26 über die Spalte 18, Druckräume 17 und Längsbohrungen 16 verbunden, d.h. der Weg des Druckmittels von dem Druckmittelanschluß 14 zu der rechten Austrittsöffnung 27 ist freigegeben.

Für die Anordnung des rechten O-Ringes 25 in seiner Ringnut 24 und das Überfahren dieses O-Ringes mit dem Spalt gilt das früher Gesagte mit der einen Abwandlung, daß dieser O-Ring in der Stellung gemäß Fig. 6 unten weder an die eine noch an die andere Seitenwand seiner Ringnut 24 angedrückt wird, da der Druck von seinen beiden benachbarten Ringräumen 15 und 26 her etwa gleich ist und demzufolge hier keine Dichtungswirkung eintritt.

Durch Verschiebung des Kolbens 13 in gleicher Weise nach links kann die Verbindung zu der linken Austrittsöffnung 27 hergestellt werden.

Fig. 8 zeigt den Gegenstand von Fig. 6, ergänzt um eine Betätigungseinrichtung:

Der Zylinder 12, zugleich Ventilgehäuse, ist an seinen beiden axialen Enden um über Anschlüsse 29 zu beaufschlagende Druckmittelräume 30 erweitert. In den Druckmittelräumen 30 sind Druckfedern 31 angeordnet. Im Schließzustand, in dem die Druckmittelräume 30 drucklos sind, sind die Druckfedern 31 mit ihrem Federteller 32 an einem Widerlagerring 33 abgestützt. Der Kolben 13, der gegenüber den Druckmittelräumen 30 bei 34 abgedichtet ist, berührt die Federteller 32 mit zwei Vorsprüngen 35.

Wird einer der beiden Druckmittelräume 30 beaufschlagt, entsteht eine Kraft auf die Kolbenflächen 36 des Kolbens 13, der diesen unter Zusammendrückung der Druckfeder 31 am anderen Ende verschiebt. Zwischen dem Federteller 32 und dem Ring 33 sind die hierfür notwendigen Durchlässe für das Druckmittel vorhanden und lediglich nicht gezeichnet.

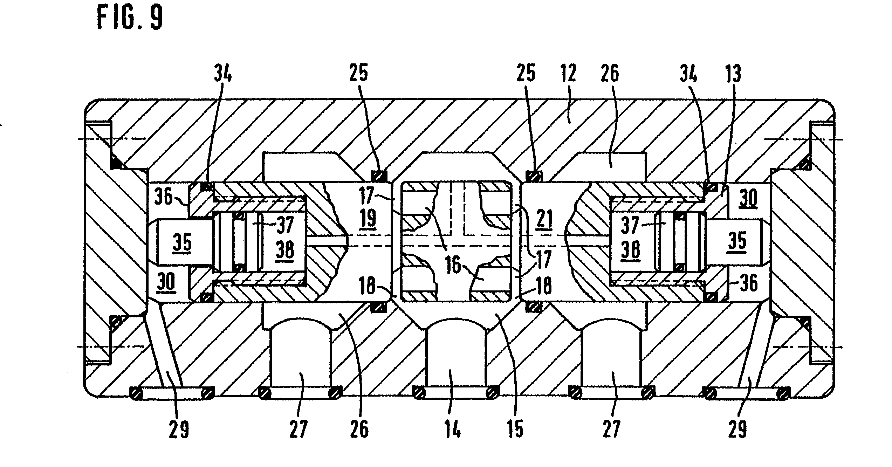

Bei dem Ausführungsbeispiel nach Fig. 9 sind gleichfalls Druckmittelräume 30 mit Anschlüssen 29 eingerichtet, und der Kolben 13 ist diesen gegenüber mit Abdichtungen 34 versehen und weist Vorsprünge 35 und um diese herum eine Kolbenfläche 36 auf. Die Vorsprünge 35 sind jedoch nachgiebig gelagert an Kolben 37, die in im Kolben 13 eingerichteten Zylindern 38 angeordnet sind. Die Kolben 37 sind, wie gestrichelt eingezeichnet, von dem Druckmittelanschluß 14 her beaufschlagt. Sie fixieren die Schließstellung. Da ihre Kolbenfläche kleiner ist als die Kolbenfläche 36, wird bei Beaufschlagung eines der Druckmittelräume 30 der Kolben 13 verschoben, wobei der Kolben 37 am anderen Ende sich relativ zu seinem Zylinder 38 in diesen einschiebt.

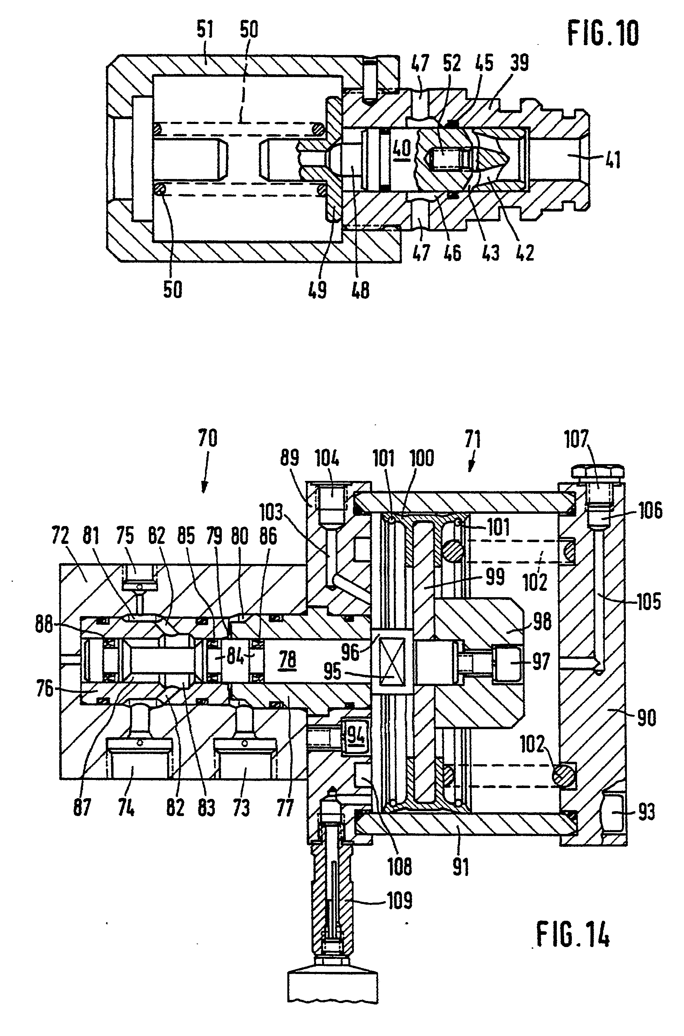

Fig. 7 und 10 zeigen im wesentlichen das gleiche Druckbegrenzungsventil, und zwar Fig. 7 nur ausschnittweise und schematisch in beiden Stellungen und Fig. 10 konkreter nur in Schließstellung. In einem äußeren Teil 39 ist ein als Kolben geführtes inneres Teil 40 angeordnet. Es weist einen von einem Anschlußstutzen 41 des äußeren Teils 39 her beaufschlagten Druckraum 42 auf. Dieser mündet mit einem schrägen Ringspalt 43 am Außenumfang des Teils 40 aus. Hinter dieser Ausmündung dichtet ein in einer Ringnut 44 des äußeren Teils 39 sitzender O-Ring 45 ab. Hinter diesem folgt in dem äußeren Teil ein Ringraum 46 mit Austrittsöffnungen 47. Am Ende ist das innere Teil 40 mit einem Vorsprung 48 auf dem Federteller 49 einer Druckfeder 50 abgestützt, die in einem Gehäuse 51 gehalten ist. Wie die Zeichnung weiter erkennen läßt, ist das innere Teil 40 an dem Spalt 43 durch eine Verschraubung 52 zusammengesetzt.

Bei Überschreitung des vorgesehenen Grenzdruckes wird die hydraulische Kraft auf das als Kolben wirkende innere Teil 40 größer als die Kraft der Druckfeder 50. Das innere Teil 40 verschiebt sich gegenüber dem äußeren Teil 39, so daß der Spalt 43 in dem Ringraum 46 ausmündet und das Druckmittel austreten kann.

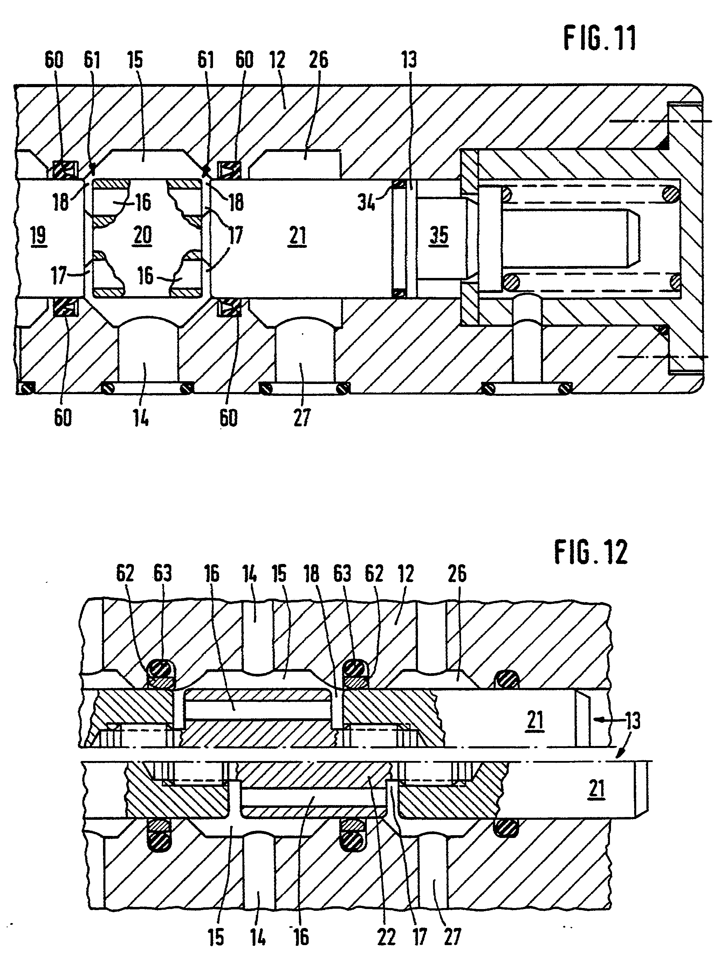

In Fig. 11 sind die O-Ringe 25 von Fig. 8 ersetzt durch Lippendichtringe 60. Die Dichtlippen sind dem Ringraum 15, in den der Druckmittelanschluß 14 mündet, und in der Schließstellung den Druckräumen 17 einschließlich der Längsbohrungen 16 des Kolbens 13 zugekehrt. Die eine Kante 61 der Spalte 18, mit denen die Druckräume 17 radial ausmünden, ist abgerundet gezeichnet. Die Form der Abrundung ist jedoch, was bei dem Maßstab der Zeichnung nicht dargestellt werden konnte, etwas ungleichmäßig derart, daß die Abrundung oben in eine ausgeprägte Schräge von etwa 15 bis 20° Neigung gegenüber der Waagerechten übergeht. Wird der Spalt 18 an dem betreffenden Lippendichtring 16 vorbeigeschoben, so trifft die Dichtlippe, wenn sie sich etwas in den Spalt hinein abwinkelt, auf diese Schräge, die sie im weiteren Verlauf der Verschiebung wieder nach außen drückt.

In gleicher Weise könnte beispielsweise in Fig. 7 und 10 statt des O-Ringes 45 ein mit seinen Lippen nach rechts gerichteter Lippendichtring angeordnet sein.

Die Wahl eines Lippendichtringes statt eines O-Ringes kommt insbesondere bei hohen Drücken und einem Spiel zwischen dem Kolben 13 und dem Zylinder 12 in Betracht, das wegen des hohen Druckes einen das Spiel überbrückenden Stützring für den O-Ring erfordern würde. Ein solcher Stützring würde durch den Spalt beschädigt und deformiert werden und schnell seine Funktionsfähigkeit verlieren.

In Fig. 12 sind die O-Ringe 25 der Fig. 6 durch eine an sich bekannte Dichtringkombination aus einem Glattring 62 und einem Druckring 63 ersetzt.

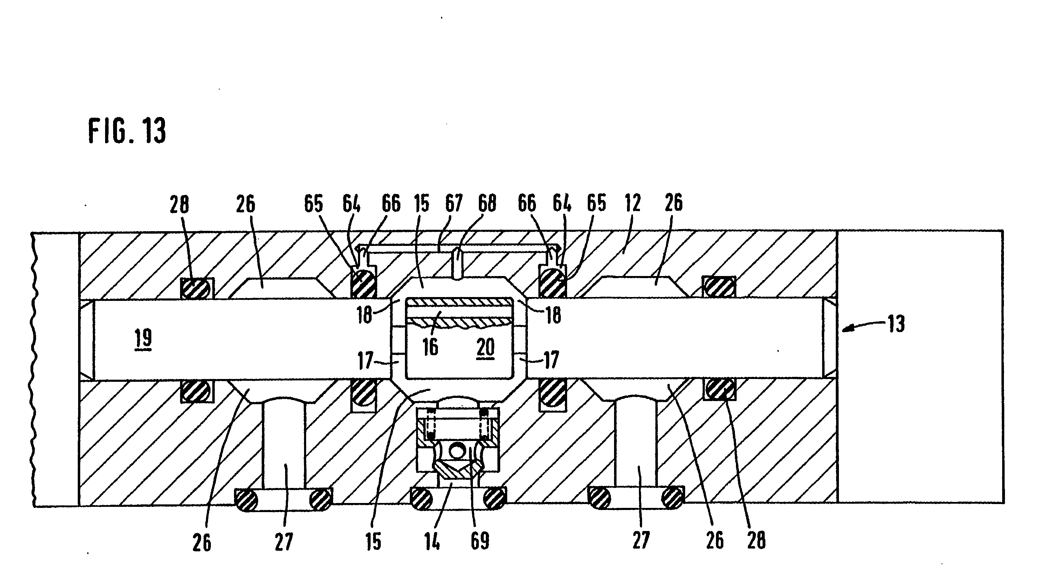

Das Ausführungsbeispiel nach Fig. 13 trägt, soweit es mit demjenigen nach Fig. 6 übereinstimmt, die gleichen Bezugszahlen wie dieses. Ersetzt sind die Ringnuten 24 und O-Ringe 25 durch anders wirkende Ringnuten 64 und O-Ringe 65. Während die O-Ringe 25 eine radiale Vorpressung haben und ihre hydraulische Pressung in den Ringnuten 24 axial eingebracht wird, haben die O-Ringe 65 in ihren Ringnuten 64 eine axiale Vorpressung, und die hydraulische Pressung erfolgt zusätzlich zu der üblichen radial. Um die radiale hydraulische Pressung zu erzeugen, sind die Ringnuten 64 durch Bohrungen 66-68 in dem Zylinder 12 mit dem Ringraum 15 verbunden, der ferner über die Spalte 18 mit den Druckräumen 17 einschließlich der Längsbohrungen 16 des Kolbens 13 kommuniziert. Der Ringraum 15 ist gegenüber dem Druckmittelanschluß 14 durch ein federbelastetes Rückschlagventil 69 abschließbar.

In der gezeichneten Schließstellung werden die O-Ringe 65 mit dem vom Druckmittelanschluß 14 her eingeleiteten Druck über die Bohrungen 66-68 und den äußeren, freien Abschnitt der Ringnut 64 radial belastet und ferner durch das Spiel zwischen Kolben 13 und Zylinder 12 hindurch in der üblichen Weise belastet, so daß ihre Anpressung im Ergebnis etwa die gleiche ist wie die der normal angeordneten O-Ringe. Auch die Verhältnisse beim Vorbeikommen des Spaltes an dem O-Ring dürften etwa die gleichen sein.

Gänzlich anders sind jedoch die Umstände im Falle einer etwaigen Druckumkehrung. Würde sich bei der Steuerschieberanordnung nach Fig. 6 von einer Austrittsöffnung 27 her ein höherer Druck aufbauen als er vom Druckmittelanschluß 14 her anliegt, würde sich der O-Ring 25 in seiner Nut 24 nach der anderen Seite hin verlagern und in den Spalt 18 hineingequetscht werden, wenn dieser bzw. sobald dieser bei Verschiebung sich mit der Nut 24 überschneidet. Steigt bei der Anordnung nach Fig. 13 der Druck in der Austrittsöffnung 27 und dem Ringraum 26 über denjenigen in dem Ringraum 15 an, so kann die im Spiel zwischen dem Kolben 13 und dem Zylinder 12 bis zu dem O-Ring 65 anliegende Flüssigkeit den O-Ring nicht nach der anderen Seite verlagern und dicht anpressen, wie es mit dem O-Ring 28 der Fall ist. Denn der O-Ring 65 hat dann keinen Halt von außen mehr, weil die dort in der Nut 64 anstehende Druckflüssigkeit nur einen geringeren Druck aufweist. Die Flüssigkeit schiebt sich also von dem Ringraum 26 her unter den O-Ring 65 und hebt ihn ab. Der höhere Druck setzt sich dann in den Ringraum 15 hinein fort. Dort bleibt er durch das Rückschlagventil 69 eingekammert. Gleich, unter welchen hier möglichen Druckverhältnissen der Spalt 18 unter die Ringnut 64 geschoben werden sollte, der O-Ring 65 wird nie in den Spalt 18 hineingequetscht. Er kann nach außen in die Ringnut 64, wo derselbe Druck herrscht wie in dem Spalt 18, unter weniger Zwängung ausweichen.

Auch die Anordnung der Dichtringe nach Fig. 13 könnte umgekehrt getroffen werden, d.h. in Nuten des Kolbens statt des Zylinders.

Das Sicherheitsarbeitsventil nach Fig. 14 gliedert sich in ein Ventil 70 und eine pneumatische Betätigungseinrichtung 71 dafür, die nur bei Beaufschlagung das Ventil öffnet und es sonst durch Federkraft geschlossen hält. Im einzelnen:

In einem Ventilgehäuse 72 mit einem Druckmittelanschluß 73 und zwei Verbraucheranschlüssen 74 und 75 sind zwei Einsatzteile 76 und 77 zu einem Zylinder für einen Kolben 78 zusammengesetzt. Durch Rippen o.dgl. an der Stirnseite des einen Einsatzteils ist zwischen den beiden Einsatzteilen ein Spalt 79 gebildet. Am inneren Rand des Spalts 79 sind die beiden Einsatzteile abgeschrägt und abgerundet. Am äußeren Rand geht der Spalt 79 über in einen Ringraum 80, der mit dem Druckmittelanschluß 73 verbunden ist.

Ein weiterer Ringraum 81 ist einerseits mit den Verbraucheranschlüssen 74 und 75 verbunden und andererseits über speichenförmig angeordnete Bohrungen 82 mit dem, hier mit einer breiten Nut 23 versehenen, Zylinderraum.

Der Kolben 78 hält in der gezeichneten Schließstellung mit zwei in Nuten 84 des Kolbens zu verschiedenen Seiten des Spalts 79 angeordneten und diesem zugekehrten Lippendichtringen 85 und 86 den vom Druckmittelanschluß 73 her in dem Spalt 79 anstehenden Druck zurück. In der Öffnungsstellung ist der Lippendichtring 75 über den Spalt 79 hinweg nach rechts verschoben. Der Spalt 79 mündet dann in eine Ausdrehung 87 des Kolbens 78 aus, und diese reicht bis über die Nut 83. So sind die Verbraucheranschlüsse 74 und 75 mit dem Druckmittelanschluß 73 verbunden. Die Druckräume in dem Ventil sind abgedichtet durch den Lippendichtring 86 auf der einen Seite und einen weiteren Lippendichtring 88 auf der anderen.

Die Betätigungseinrichtung 71 besteht aus einem Pneumatikzylinder mit zwei verhältnismäßig dicken Stirnwänden 89 und 90 und einem zwischen diesen eingefaßten Mantel 91. Der Zusammenhalt des Pneumatikzylinders ist in der Zeichnung nicht dargestellt, zu erkennen ist nur eine Schraube 93. Die Stirnwand 89 ist mittels Schrauben 94 mit dem Ventilgehäuse 72 verschraubt. Das Einsatzteil 77 ragt in die Stirnwand 89 hinein, der Kolben 78 erstreckt sich darüber hinaus in den Zylinderraum des Pneumatikzylinders. Hier trägt er zwischen einer eine Schlüsselfläche 95 aufweisenden Verdickung 96 und einem stirnseitig mittels einer Schraube 97 aufgesetzten Druckstück 98 einen Kolben 99. Dieser ist mit einer doppleseitigen Lippendichtung 100 versehen, deren Lippen jeweils durch eine ringförmige Schraubenfeder 101 eine Vorspannung erhalten.

Eine zwischen der Stirnwand 90 und dem Kolben 99 angeordnete Druckfeder 102 wirkt in Schließrichtung auf den Kolben 78 des Ventils. Die Schließstellung ist definiert durch Anliegen der Verdickung 96 an der Stirnseite des Einsatzteils 77.

In Öffnungsstellung gebracht wird das Ventil durch Beaufschlagung der der Druckfeder 102 gegenüberliegenden Seite des Kolbens 99 über eine in der Stirnwand 89 ausgebohrte Druckluftzuleitung 103 mit einem Druckluftanschluß 104. Die Öffnungsstellung ist definiert durch Anstoß des Druckstückes 98 an die Stirnwand 90.

Eine in dieser Stirnwand ausgebohrte Luftverbindung 105 mit einem Anschluß 106, in den ein Filtereinsatz 107 eingeschraubt ist, kann statt der Druckluftzuleitung 103 als Druckluftzuleitung dienen, wenn in Umkehrung der gezeichneten Anordnung das Ventil durch die Druckfeder 102 in Öffnungsstellung gebracht und gehalten werden soll, wofür die Druckfeder dann auf der anderen Seite des Kolbens 99 in eine Ausnehmung 108 der Stirnwand 89 eingesetzt und der Federeinsatz 107 in den Druckluftanschluß 104 eingeschraubt wird.

Auch ein Kondensatablaß 109 an sich bekannter Art wird dann auf die andere Seite versetzt.

**Patentansprüche**

1. Hydraulisches Ventil mit einem äußeren Teil (1) von abschnittweise zylindrischem Innenumfang und einem axial relativbeweglich darin angeordneten inneren Teil (2) von abschnittweise zylindrischem Außenumfang, wobei in dem einen, äußeren oder inneren, Teil ein hydraulischer Druckraum (3) angeordnet ist, der an dem Innen- bzw. Außenumfang dieses Teils einen Ausfluß (4) aufweist und dem eine Weiterführung (7) zugeordnet ist, die in Schließstellung durch einen in einer Ringnut (8) des anderen Teils sitzenden Dichtring (10) von dem Ausfluß dicht getrennt ist und in Öffnungsstellung, in der der Dichtring sich auf der anderen Seite des Ausflusses befindet, an den Ausfluß anschließt, dadurch gekennzeichnet, daß der Ausfluß des Druckraumes (3;17;42) als ein mindestens in Abschnitten über den betreffenden Innen- bzw. Außenumfang laufender ringförmige Spalt (4;18;43) ausgebildet ist.

2. Ventil nach Anspruch 1, dadurch gekennzeichnet, daß der Dichtring ein O-Ring (10;25;45;65), ein Lippenring (60) oder eine Dichtringkombination (62,63) ist.

3. Ventil nach Anspruch 1 oder 2, dadurch gekennzeichnet, daß der ringförmige Spalt (4;18;43) ununterbrochen ausgebildet ist.

4. Ventil nach einem der Ansprüche 1 bis 3, dadurch gekennzeichnet, daß die Kanten (5) des Spalts (4) abgeschrägt oder abgerundet sind.

5. Ventil nach einem der Ansprüche 1 bis 4, dadurch gekennzeichnet, daß die Kanten der Ringnut (8), in der der Dichtring (10) sitzt, abgeschrägt oder abgerundet sind.

6. Ventil nach einem der Ansprüche 1 bis 5, dadurch gekennzeichnet, daß der Spalt (18;43) durch Zusammenfügen, vorzugsweise Zusammenschrauben (22,23;52), des betreffenden Teils (13;40) an dem Spalt gebildet ist.

7. Ventil nach Anspruch 6, dadurch gekennzeichnet, daß die Spaltbreite, vorzugsweise mittels unterschiedlicher Abstandhalter, veränderbar ist.

8. Ventil nach einem der Ansprüche 1 bis 7, dadurch gekennzeichnet, daß der Dichtring (65) in der genannten Ringnut (64) mit axialer Vorpressung sitzt und die Ringnut (64) hinter dem Dichtring (65) mit dem genannten Druckraum (17) verbunden (66-68) ist und dieser nach der hydraulischen Druckmittelquelle (14) hin durch ein Rückschlagventil (69) verschließbar ist.

9. Ventil nach einem der Ansprüche 1 bis 7, dadurch gekennzeichnet, daß der genannte in einem inneren Teil (13) angeordnete hydraulische Druckraum (17), der an dem Außenumfang des inneren Teils den als Spalt (18) ausgebildeten Ausfluß aufweist und dem die Weiterführung (26, 27) zugeordnet ist, die in Schließstellung durch den in einer Ringnut (24) des äußeren Teils (11) sitzenden Dichtring (25) von dem Spalt (18) dicht getrennt ist und in Öffnungsstellung, in der der Dichtring (25) sich auf der anderen Seite des Spaltes (18) befindet, an den Spalt (18) anschließt, vom äußeren Teil (11) her beaufschlagt ist in der Weise, daß ein am Innenumfang des äußeren Teils (11) angeordneter Ringraum (15), in den ein Druckmittelanschluß (14) mündet, in der Schließstellung mit zwei durch eine Mehrzahl von Längsbohrungen (16) verbundenen Druckräumen (17) des inneren Teils (13) in Verbindung steht, die in der Schließstellung, zusammen genommen, abgedichtet sind durch zwei in Ringnuten (24) des äußeren Teils sitzende und an dem inneren Teil (13) anliegende Dichtringe (25), jenseits derer die Weiterführungen (26, 27) eingerichtet sind.

## Claims

1. A hydraulic valve having an outer part (1) with a sectionally cylindrical inner circumference and an inner part (2) with a sectionally cylindrical outer circumference disposed relatively movably in said outer part, whereby in either the outer or inner part there is disposed a hydraulic pressure chamber (3), which comprises an outlet (4) on the inner or outer circumference of this part and to which an continuation line (7) is assigned, which in the closed position is hermetically separated from the outlet by a seal ring (10) seated in an annular groove (8) of the other part, and in the open position, in which the seal ring is located on the other side of the outlet, is adjacent to the outlet, characterised in that the outlet of the pressure chamber (3; 17; 42) is constructed as an annular slit (4; 18; 43) which extends at least in sections over the respective inner or outer circumference.

2. A valve according to Claim 1, characterised in that the seal ring is an O-ring (10; 25; 45; 65), a lip seal (60) or a seal ring combination (62, 63).

3. A valve according to Claim 1 or 2, characterised in that the annular slit (4; 18; 43) is continuous.

4. A valve according to one of Claims 1 to 3, characterised in that the edges (5) of the slit (4) are bevelled or rounded-off.

5. A valve according to one of Claims 1 to 4, characterised in that the edges of the annular groove (8), in which the seal ring (10) is seated, are bevelled or rounded-off.

6. A valve according to one of Claims 1 to 5, characterised in that the slit (18; 43) is formed by joining, preferably by screwing (22, 23; 52), the respective part (13, 40) at the slit.

7. A valve according to Claim 6, characterised in that the slit width can be adjusted, preferably by means of variable spacers.

8. A valve according to one of Claims 1 to 7, characterised in that the seal ring (65) is housed in said annular groove (64) with axial preliminary pressure and the annular groove (64) is connected (66-68) behind the seal ring (65) to said pressure chamber (17) and said pressure chamber can be closed behind the hydraulic pressure medium source (14) by a check valve (69).

9. A valve according to one of Claims 1 to 7, characterised in that the said hydraulic pressure chamber (17), which is disposed in an inner part (13), and which on the outer circumference of the inner part comprises the outlet constructed as slit (18) and to which the continuation line (26, 27) is assigned, which in the closed position is hermetically separated from the slit (18) by the seal ring (25) seated in an annular groove (24) on the outer part (11), and in the open position, in which the seal ring (25) is located on the other side of the slit (18), is adjacent to the slit (18), is impinged from the outer part in such a way that an annulus (15), which is disposed on the inner circumference of the outer part (11), and into which a pressure medium line (14) opens, in the closed position communicates with two pressure chambers (17) of the inner part (13) connected by a plurality of longitudinal bores (16), and in the closed position said pressure chambers, considered together, are sealed by two seal rings (25), which are seated in annular grooves (24) of the outer part and are adjacent to the inner part (13), and on the other side of which continuation lines (26, 27) are accommodated.

## Revendications

1. Vanne hydraulique comprenant une pièce extérieure (1) qui présente un contour intérieur segmenté délimité par des surfaces cylindriques et une pièce intérieure (2) qui présente un contour extérieur segmenté délimité par des surfaces cylindriques et qui est montée dans la première pièce de manière à pouvoir s'y déplacer d'un mouvement relatif dans le sens axial, l'une de ces pièces, la pièce extérieure ou la pièce intérieure, comprenant une cavité à pression hydraulique (3) qui comporte, au niveau du contour intérieur ou du contour extérieur de la pièce, un orifice de sortie (4) et à laquelle correspond un conduit (7) qui, en position de fermeture, est hermétiquement séparé de cet orifice de sortie par une bague d'étanchéité (10) placée dans une rainure annulaire (8) de l'autre pièce et qui, dans la position d'ouverture, dans laquelle la bague d'étanchéité se trouve de l'autre côté de l'orifice de sortie, se raccorde à cet orifice de sortie, caractérisée en ce que l'orifice de sortie de la cavité à pression (3, 17, 42) est une fente annulaire (4, 18, 43) qui s'étend, au moins dans certains secteurs, sur le contour intérieur ou extérieur correspondant.

2. Vanne selon la revendication 1, caractérisée en ce que la bague d'étanchéité est un joint torique (10, 25, 45, 65), un joint à lèvres (60) ou une combinaison de bagues d'étanchéité (62, 63).

3. Vanne selon l'un des revendications 1 ou 2, caractérisée en ce que la fente annulaire (4, 18, 43) est ininterrompue.

4. Vanne selon une des revendications 1 à 3, caractérisée en ce que les bords (5) de la fente (4) sont biseautés ou arrondis.

5. Vanne selon l'une des revendications 1 à 4, caractérisée en ce que les bords de la rainure annulaire (8) dans laquelle la bague d'étanchéité (10) est placée sont biseautés ou arrondis.

6. Vanne selon une des revendications 1 à 5, caractérisée en ce que la fente (18, 43) résulte de l'assemblage, de préférence par vissage (22, 23, 52), de la pièce correspondante (13, 40) au niveau de la fente.

7. Vanne selon la revendication 6, caractérisée en ce que la largeur de la fente peut être modifiée, de préférence au moyen de différentes pièces de maintien à distance.

8. Vanne selon une des revendications 1 à 7, caractérisée en ce que la bague d'étanchéité (45) est engagée dans la rainure annulaire (64) avec une précompression axiale, que la rainure annulaire (64) est reliée, en arrière de la bague d'étanchéité (65), à la cavité à pression (17) et que celle-ci peut, dans la direction de la source (14) de moyen de pression hydraulique, être fermée par une soupape d'arrêt (69).

9. Vanne selon une des revendications 1 à 7, caractérisée en ce que la cavité à pression hydraulique (17) qui est ménagée dans une pièce intérieure (13) et qui, au niveau du contour extérieur de cette pièce intérieure, comporte l'orifice de sortie constitué par une fente (18) et à laquelle correspond le conduit (26, 27) qui, en position de fermeture, est hermétiquement séparé de la fente (18) par la bague d'étanchéité (25) qui se trouve dans une rainure annulaire (24) de la pièce d'extérieure (11) et qui, en position d'ouverture, dans laquelle la bague d'étanchéité (25) se trouve de l'autre côté de la fente (18), se raccorde à la fente (18), est soumise à une action exercée du côté de la pièce extérieure de telle manière qu'un espace annulaire (15), qui est ménagé dans le contour intérieur de la pièce extérieure (11) et dans lequel débouche un raccord (14) pour le milieu de pression, est, dans la position de fermeture, relié à deux cavités de pression (17) de la pièce intérieure (13) qui sont reliées par une pluralité d'alésage longitudinaux (16) et qui, dans la position de fermeture, sont ensemble hermétiquement séparés par deux bagues d'étanchéité (25) qui sont placées dans des rainures annulaires (24) de la pièce extérieure et s'appliquent contre la pièce intérieure (13) et au-delà desquelles se situent les conduits (26, 27).

EP 0 257 539 B1

FIG. 1

FIG. 2

FIG. 3

FIG. 4

FIG. 5

**FIG. 6**

**FIG. 7**

FIG.8

# FIG. 9

EP 0 257 539 B1

FIG.10

FIG.14

FIG.11

FIG.12

FIG. 13

EP 0 257 539 B1